# EUROPÄISCHE PATENTSCHRIFT

(11) **EP 4 405 761 B1**
(45) Veröffentlichungstag und Bekanntmachung des Hinweises auf die Patenterteilung: **26.08.2026**
(21) Anmeldenummer: 22777608.5
(22) Anmeldetag: 07.09.2022
(51) Int. Cl.: G05B 19/042

(54) **VERFAHREN ZUM ERFASSEN VON ERGEBNISSEN EINER EVALUIERUNG, DIAGNOSE UND/ODER ÜBERPRÜFUNG VON ZUMINDEST EINER GERÄTEFUNKTIONALITÄT EINES FELDGERÄTS**
METHOD FOR CAPTURING RESULTS OF AN EVALUATION, DIAGNOSIS AND/OR CHECK OF AT LEAST ONE DEVICE FUNCTIONALITY OF A FIELD DEVICE
PROCÉDÉ DE CAPTURE DE RÉSULTATS D'UNE ÉVALUATION, D'UN DIAGNOSTIC ET/OU D'UN CONTRÔLE D'AU MOINS UNE FONCTIONNALITÉ DE DISPOSITIF D'UN DISPOSITIF DE TERRAIN

(30) Priorität: 20.09.2021 DE 102021124249
(43) Veröffentlichungstag der Anmeldung: 31.07.2024
(73) Patentinhaber: Endress+Hauser Process Solutions AG, 4153 Reinach (CH)
(72) Erfinder: DE GROOT, Vincent, 68300 St. Louis (FR)
(74) Vertreter: Endress + Hauser Group Services (Deutschland) AG+Co. KG
(86) Internationale Anmeldenummer: PCT/EP2022/074892
(87) Internationale Veröffentlichungsnummer: WO 2023/041400

(56) Entgegenhaltungen:
- DE-A1- 102016 124 146
- DE-A1- 102019 134 895

## Beschreibung

Die Erfindung betrifft ein Verfahren zum Erfassen von Ergebnissen einer Evaluierung, Diagnose und/oder Überprüfung von zumindest einer Gerätefunktionalität eines Feldgeräts, wobei das Feldgerät im Rahmen der Evaluierung bzw. Überprüfung zumindest einen Rohdatensatz von Reportparametern enthaltend das Ergebnis der Evaluierung, bzw. Diagnose, bzw. Überprüfung generiert.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme (DCS) bzw. Steuereinheiten, wie beispielsweise eine SPS (speicherprogrammierbare Steuerung). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zum Bedienen (bspw. Parametrieren oder Abrufen von Daten) der Feldgeräte kommen häufig auch mobile Bediengeräte zum Einsatz. Diese werden kabelgebunden (bspw. über eine Service-Schnittstelle) oder drahtlos (bspw. via Bluetooth) mit einem Feldgerät verbunden. Als Bediengeräte kommen beispielsweise, Laptops, mobile Endgeräte, wie Smartphones oder Tablets, oder eine zentrale Asset Management Stationen zum Einsatz.

Zur Bedienung der Feldgeräte sind entsprechende Bedienprogramme (Bedientools) notwendig, die auf den übergeordneten Einheiten oder in den mobilen Bediengeräten entweder eigenständig ablaufen (Endress+Hauser FieldCare, PACTware, AMS Fisher-Rosemount, PDM Siemens) oder aber auch in Anwendungen des Leitstands (Siemens PCS7, ABB Symphony, Emerson Delta V) integriert sind. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Die Integration von Feldgeräten in solche Bedienprogramme erfolgt über Gerätetreiber, beziehungsweise über Gerätebeschreibungen. Diese werden von den Geräteherstellern bereitgestellt, damit die übergeordneten Einheiten, beziehungsweise die auf diesen übergeordneten Einheiten ablaufenden Bedienprogramme, die Bedeutung der von den Feldgeräten gelieferten Informationen erkennen und interpretieren können. Ein solches Bedienprogramm, in welches die Gerätebeschreibungen, bzw. Gerätetreiber geladen werden, wird auch als Rahmenapplikation bezeichnet.

Für eine vollumfängliche Bedienung der Feldgeräte sind spezielle Gerätetreiber, so genannte DTMs (Device Type Manager), die den FDT (Field Device Tool) Spezifikationen entsprechen, erhältlich. Viele Feldgerätehersteller liefern für ihre Feldgeräte entsprechende DTMs aus. Die DTMs kapseln alle Variablen und Funktionen des jeweiligen Feldgeräts und bieten meist eine graphische Nutzeroberfläche zum Bedienen der Geräte innerhalb der Rahmenapplikation an.

Die Gerätetreiber bieten die Möglichkeit, bestimmte Gerätefunktionalitäten zu evaluieren, diagnostizieren und/oder zu überprüfen. Viele moderne Feldgeräte ermöglichen beispielsweise einen Selbsttest, beispielsweise im Rahmen der "Heartbeat" (eine in den Feldgeräten der Anmelderin implementierte Selbsttestfunktionalität)- oder SIL-Funktionalität. Die Das Ergebnis dieser Selbsttests, Evaluation, etc. wird von dem Gerätetreiber in einem Report ausgegeben. Dieser erhält die relevanten Reportparameter, also Testergebnisse, Gerätestatus, etc. Der Report wird insbesondere direkt an einen Drucker gesendet und in physischer Form ausgedruckt. Die Bearbeitung des Reports erfolgt beispielsweise durch das Servicepersonal, welches eine Sichtprüfung des Reports vornimmt und anschließend signiert. Nach erfolgter Unterschrift wird der Report eingescannt oder physisch aufbewahrt.

Da die Reports oftmals mehrere Seiten lang sind, ist das Scannen mit einem hohen manuellen Aufwand geprägt, der fehleranfällig ist (schlechte Qualität des Scans, versehentliches Weglassen einzelner Seiten, etc.). Die gescannten Reports sind außerdem nicht maschinenlesbar und weisen hauptsächlich Bildelemente auf.

Aus dem Stand der Technik sind Verfahren bekannt, die den Einsatz von grafischen Codes zur Übertragung feldgerätebezogener Daten vorsehen.

DE 10 2019 134 895 A1 offenbart ein Verfahren zum rückwirkungsfreien Übertragen feldgerätebezogener Daten zwischen einer ersten und einer zweiten Bedieneinheit. Hierbei wird ein zweidimensionaler grafischer Code erzeugt, der in Form einer Sequenz mehrerer Bilder auf einer Anzeigeeinheit der ersten Bedieneinheit visualisiert wird. Die Sequenz wird von einer optischen Erfassungseinheit der zweiten Bedieneinheit erfasst, und die enthaltenen Daten werden extrahiert.

DE 10 2016 124 146 A1 betrifft ein Verfahren zur Inbetriebnahme oder Wartung eines Feldgeräts, bei dem Identifikationsinformationen und Diagnoseinformationen über statische und dynamische Codes optisch ausgelesen und an eine cloudbasierte Serviceplattform übertragen werden.

Ausgehend von dieser Problematik liegt der Erfindung die Aufgabe zugrunde, die Handhabbarkeit und langfristige Aufbewahrung solcher Reports zu vereinfachen.

Die Aufgabe wird durch ein Verfahren zum Erfassen von Ergebnissen einer Evaluierung, Diagnose und/oder Überprüfung von zumindest einer Gerätefunktionalität eines Feldgeräts gelöst, wobei das Feldgerät im Rahmen der Evaluierung, bzw. Diagnose, bzw. Überprüfung zumindest einen Rohdatensatz von Reportparametern enthaltend das Ergebnis der Evaluierung, bzw. Diagnose, bzw. Überprüfung generiert, umfassend:
a) Erzeugen eines physischen Reports, wobei der physische Report einen grafischen Code mit codierten Informationen aufweist, wobei die codierten Informationen zumindest den Rohdatensatz, eine Geräteidentifikation des Feldgeräts und das Datum des Reports umfassen, und wobei der physische Report von zumindest einer Person mit zumindest einer Unterschrift unterzeichnet wird; **dadurch gekennzeichnet, dass** das Verfahren ferner die folgenden Schritte umfasst:
b) Erfassen einen digitalen Scan der Titelseite des unterzeichneten Reports mittels einer optischen Erfassungseinheit, auf welcher sich der grafischen Code und die mindestens eine Unterschrift befindet;
c) Separieren den grafischen Code von dem Scan und decodieren den in dem grafischen Code enthaltenen Rohdatensatz mittels eine Codeextraktionseinheit und parallel dazu separieren der zumindest einen Unterschrift von dem erfassten digitalen Scan im Bildformat mittels eine Unterschriftenextraktionseinheit, wobei Reportdaten durch Anreichern des aus dem decodierten grafischen Code extrahierten Rohdatensatzes mit feldgerätespezifischen Informationen erzeugt werden;
d) Erzeugen eines maschinenlesbaren Reports und/oder eines Reports in einem publikationsfähigen Dateiformat, insbesondere in einem PDF-Format, enthaltend die decodierten Informationen, wobei der maschinenlesbare Report die Reportdaten enthält, bzw. wobei der Report in dem publikationsfähigen Dateiformat die Reportdaten enthält, wobei der Report in dem publikationsfähigen Dateiformat die zumindest eine separierte Unterschrift enthält; und
e) Übermitteln des maschinenlesbaren Reports und/oder des Reports in dem publikationsfähigen Format an einen Server.

Mittels des erfindungsgemäßen Verfahrens werden Reports erstellt, die in einem maschinenlesbaren Format, also beispielsweise als Code, oder in einem publikationsfähigem Dateiformat, insbesondere PDF oder XPS vorliegen. Der manuelle Aufwand zum Scannen des physischen, also auf Papier gedruckten, Reports wird verringert, sowie mögliche Fehlerquellen reduziert, da lediglich der grafische Code und die mindestens eine Unterschrift eingescannt werden müssen.

Bei dem grafischen Code handelt es sich insbesondere um einen zweidimensionalen Code, beispielsweise ein QR-Code, um einen Barcode oder um einen ähnlich geeigneten grafischen Code.

Es kann vorgesehen sein, dass der finale maschinenlesbare oder publikationsfähige Report nur erstellt wird, wenn eine Unterschrift auf dem physischen Report gescannt und erkannt wurde.

Gemäß einer ersten Variante des erfindungsgemäßen Verfahrens ist vorgesehen, dass die codierten Informationen den Rohdatensatz der Reportparameter des Feldgeräts umfassen, wobei Reportdaten durch Anreichern des aus dem decodierten grafischen Code extrahierten Rohdatensatzes der Reportparameter mit feldgerätespezifischen Informationen erzeugt werden, wobei der maschinenlesbare Report die Reportdaten enthält, bzw. wobei der Report in dem publikationsfähigen Dateiformat die Reportdaten enthält. Dem finalen maschinenlesbaren, bzw. publikationsfähigen Report werden also weitere feldgerätespezifische Informationen hinzugefügt, bspw. Service- oder Wartungsinformationen, Messstelleninformationen, applikationsspezifische Informationen, etc., die im ursprünglichen Report nicht vorhanden sind und gegebenenfalls aufwändig hinzugefügt werden müssten.

Gemäß einer ersten Variante des erfindungsgemäßen Verfahrens ist vorgesehen, dass eine Bedieneinheit den Rohdatensatz der Reportparameter aus dem Feldgerät ausliest oder wobei die Bedieneinheit das Feldgerät anweist, den Rohdatensatz der Reportparameter zu erstellen und an die Bedieneinheit zu übermitteln, wobei die Bedieneinheit den grafischen Code erstellt und einen Drucker anweist, den physischen Report zu erzeugen. Bei der ersten Bedieneinheit handelt es sich beispielsweise um eine Bedieneinheit im Sinne des von der Anmelderin vertriebenen "Field Xpert", oder um einen Laptop oder ein (Industrie) Tablet. Vorteilhafterweise befindet sich auf der ersten Bedieneinheit eine Rahmenapplikation, insbesondere basierend auf dem FDT-Standard, welche zumindest einen zum Feldgerät passenden Gerätetreiber, insbesondere ein DTM, hostet. Der Gerätetreiber besitzt weist das Gerät zum Erstellen des Rohdatensatzes der Reportparameter an, beispielsweise durch Initiierens eines Selbsttests, und nimmt die weitere Verarbeitung, insbesondere das Erstellen des grafischen Codes und das Anweisen des Druckers zum Erstellen des physischen Reports, vor.

Gemäß einer zweiten Variante des erfindungsgemäßen Verfahrens ist vorgesehen, dass das Feldgerät den Rohdatensatz der Reportparameter erstellt, wobei das Feldgerät den grafischen Code erstellt und wobei das Feldgerät einen Drucker anweist, beispielsweise über Ethernet, WLAN oder Bluetooth, den physischen Report zu erzeugen. Dieser Prozess wird beispielsweise durch einen Benutzer initiiert. Es kann auch vorgesehen sein, dass das Feldgerät den Prozess selbstständig startet, beispielsweise bei Vorliegen einer bestimmten Prozessbedingung und/oder in regelmäßigen Zeitabständen.

Gemäß einer ersten Variante des erfindungsgemäßen Verfahrens ist vorgesehen, dass das Feldgerät den Rohdatensatz der Reportparameter erstellt, wobei das Feldgerät den grafischen Code erstellt, wobei das Feldgerät eine Anzeigeeinheit aufweist und den grafischen Code visualisiert, wobei eine Bedieneinheit den grafischen Code mittels einer optischen Erfassungseinheit erfasst, wobei die Bedieneinheit einen Drucker anweist, den physischen Report zu erzeugen. Insbesondere handelt es sich bei der ersten Bedieneinheit im vorliegenden Falle um ein mobiles Endgerät, insbesondere ein Smartphone oder ein Tablet, auf welchem eine Anwendungsapplikation (App) installiert ist, welche ausgestaltet ist, auf Basis des in dem grafischen Code enthaltenen Rohdatensatzes den Drucker entsprechend anzuweisen, den physischen Report entsprechend zu erstellen.

Eine vorteilhafte Ausgestaltung des erfindungsgemäßen Verfahrens sieht vor, dass die Schritte b) bis e) mittels einer zweite Bedieneinheit, welche die optische Erfassungseinheit aufweist, durchgeführt werden. Insbesondere handelt es sich bei der zweiten Bedieneinheit im vorliegenden Falle um ein mobiles Endgerät, insbesondere ein Smartphone oder ein Tablet, auf welchem eine Anwendungsapplikation (App) installiert ist.

Eine alternative Ausgestaltung des erfindungsgemäßen Verfahrens ist vorgesehen, dass der Schritt b) mittels Scanners oder Kamera welche die optische Erfassungseinheit aufweisen durchgeführt wird, wobei der erfasste optische Code und die zumindest eine erfasste Unterschrift auf einen Server transferiert werden und wobei der Server die Schritte c) und d) durchführt.

Gemäß einer vorteilhaften Ausgestaltung des erfindungsgemäßen Verfahrens ist vorgesehen, dass die Person handgeschriebene Notizen auf dem physischen Report vermerkt, wobei die handschriftlichen Notizen ebenfalls wie die Unterschrift erfasst werden und in dem maschinenlesbaren Report, bzw. dem Report in dem publikationsfähigen Dateiformat enthalten sind. Insbesondere kann vorgesehen sein, die handschriftlichen Notizen im Anschluss an das Erfassen zu erkennen und ebenfalls maschinenlesbar zu machen (OCR).

Gemäß einer vorteilhaften Ausgestaltung des erfindungsgemäßen Verfahrens ist vorgesehen, dass die Reportparameter Heartbeat-Parameter oder SIL-Parameter sind, welche im Zuge eines Diagnosetests des Feldgeräts erstellt werden. Es kann sich jedoch auch um weitere Parameter des Feldgeräts, insbesondere betriebs- oder anwendungsspezifische Parameter, handeln, bzw. um weitere Parameter, die bei vergleichbaren Evaluierungs-, Diagnose-, und/oder Überprüfungsmethoden vom Feldgerät erstellt werden.

Gemäß einer vorteilhaften Weiterbildung des erfindungsgemäßen Verfahrens ist vorgesehen, dass der maschinenlesbare Report, bzw. der Report in dem publikationsfähigen Format wiederholt erstellt und an den Server übermittelt wird.

Gemäß einer vorteilhaften Ausgestaltung des erfindungsgemäßen Verfahrens ist vorgesehen, dass der Server die Reportdaten der maschinenlesbaren Reports auf Langzeitveränderungen und/oder Anomalien untersucht. Beispielsweise kann ein langsames Driften bestimmter Reportparameter detektiert werden, so dass der Anlageninhaber, bzw. der Feldgerätebesitzer frühzeitig auf präventive oder vorzunehmende (Wartungs-)Maßnahmen hingewiesen wird.

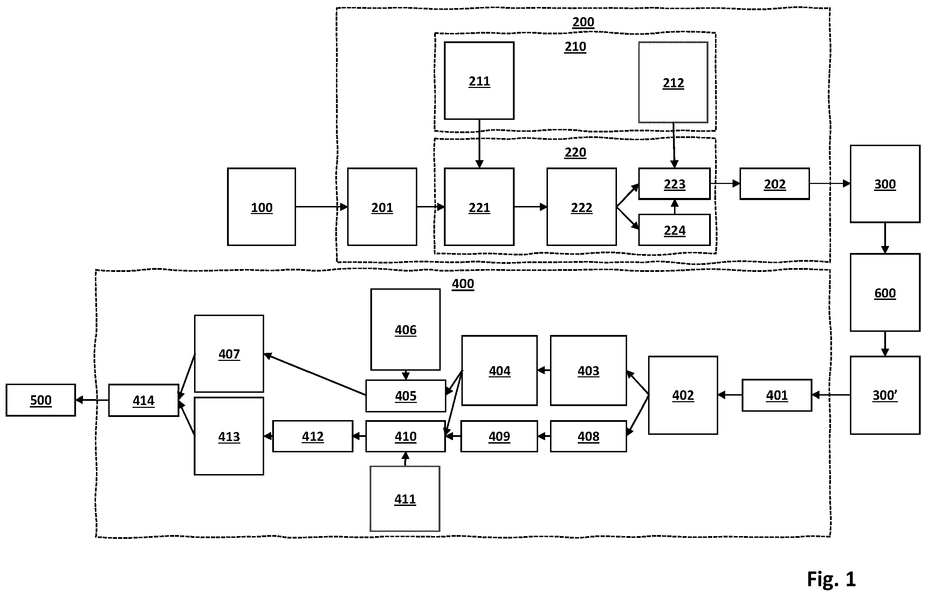

Die Erfindung wird anhand der nachfolgenden Figur näher erläutert. Es zeigt
Fig. 1: eine schematische einer Ausgestaltung des erfindungsgemäßen Verfahrens.

In Fig. 1 ist zu unterscheiden zwischen Komponenten (in Rechtecken) und Verfahrensschritten (Pfeile). Das Verfahren beginnt bei dem Feldgerät 100.

In einem ersten Verfahrensschritt werden Reportparameter eines Feldgeräts 100 von einer ersten Bedieneinheit 200 abgefragt, bzw. von dem Feldgerät 100 an die ersten Bedieneinheit 200 übermittelt. Die Reportparameter werden von dem Feldgerät 100 im vorliegenden Fall im Zuge eines Heartbeat-Selbsttests erstellt und liefern eine Aussage über die Qualität verschiedener Funktionalitäten des Feldgeräts 100. Beispiele für Feldgeräte sind im einleitenden Teil der Beschreibung ausführlich beschrieben worden. Bei der ersten Bedieneinheit 200 handelt es sich um ein Industrietablet, auf welchem eine (FDT-)Rahmenapplikation installiert ist und abläuft. Für das Feldgerät 100 ist sowohl eine spezifische Gerätebeschreibung (beispielsweise eine DD) 210, als auch ein Gerätetreiber (bspw. ein DTM) 220 installiert und in der (FDT-)Rahmenapplikation integriert.

Die erste Bedieneinheit 200 ist über einen Feldbus, beispielsweise HART, Foundation Fieldbus, Profibus PA, aber auch ein ethernetbasierter Feldbus oder ein drahtloser Feldbus kommt in Betracht, mit dem Feldgerät 100 verbunden. Ein Feldbus-Master 201, der Teil der ersten Bedieneinheit 200 ist fragt im vorliegenden Fall die Reportparameter von dem Feldgerät 100 ab. Die abgefragen Reportparameter werden von einer universellen Parameterlesekomponente 221 des Gerätetreibers 220 gelesen. Zur Interpretation und Zuordnung der Reportparameter greift diese auf eine gerätespezifische Parameterliste 211 der Gerätebeschreibung 210 zu, klassifiziert die Reportparameter und fügt diese zu einem Rohdatensatz 222 zusammen.

Der Rohdatensatz 222 wird sowohl einem Codegenerator 224, als auch einer Reportformatierungseinheit 223, beide jeweils Komponenten des Gerätetreibers 220 zugeführt. Der Codegenerator 224 erstellt einen grafischen Code, insbesondere einen QR-Code, der den Rohdatensatz 222 enthält, und übergibt diesen an die Reportformatierungseinheit 223. Mithilfe eines gerätespezifischen Reportlayouts 212, welches in der Gerätebeschreibung 210 enthalten ist, wird ein Drucklayout des Reports erstellt. Dieses Drucklayout wird an einen Druckertreiber 202 der ersten Bedieneinheit 200 übermittelt. Der Druckertreiber 202 weist einen externen Drucker an, einen physischen Report 300 des Heartbeat-Selbstdiagnosetests des Feldgeräts 100 anzufertigen.

Der physische Report 300, der neben den ausgedruckten Reportparametern auf der ersten Seite den grafischen Code enthält, wird von einem Servicetechniker, bzw. einem vergleichbaren Bediener 600 geprüft und nach erfolgter Prüfung unterzeichnet. Gegebenenfalls wird der physische Report 200 von weiteren Personen/Bedienern geprüft, die dieses ebenfalls unterzeichnen. Optional werden handschriftliche Notizen auf dem physischen Report 300 vermerkt, insbesondere in einem dafür vorgesehenen Bereich, bzw. Feld.

Der unterzeichnete Report 300' wird im Anschluss von einer zweiten Bedieneinheit 400 gescannt. Hierfür weist die zweite Bedieneinheit 400 eine optische Erfassungseinheit 401, insbesondere eine Kamera, auf. Bei der zweiten Bedieneinheit 400 handelt es sich im vorliegenden Fall um ein Smartphone, auf welchem eine App installiert ist, beispielsweise die von der Anmelderin herausgegebene App "Netilion Scanner". Die App weist die im Folgenden beschriebenen Komponenten auf und führt die im Folgenden beschriebenen Verfahrensschritte aus:
Die optische Erfassungseinheit 401 erfasst einen digitalen Scan 402 der Titelseite des unterzeichneten Reports 300', auf welcher sich der grafische Code und die mindestens eine Unterschrift befindet.

Eine Codeextraktionseinheit 403 separiert den grafischen Code von dem Scan 402 und decodiert den in dem grafischen Code enthaltenen Rohdatensatz 404. Der Rohdatensatz wird anschließend mit feldgerätespezifischen Informationen 406 zu Reportdaten 405 angereichert. Aus diesen Reportdaten 405 wird anschließend ein maschinenlesbarer Report 407 erstellt.

Parallel dazu separiert eine Unterschriftenextraktionseinheit 408 die mindestens eine Unterschrift 409 im Bildformat von dem Scan 408. Zusammen mit dem Rohdatensatz 404 wird die Unterschrift 309 an eine Reportformatierungseinheit übermittelt, die mithilfe eine gerätespezifischen Reportlayouts 411 Reportdaten 410 erstellt. Diese Reportdaten 412 werden mittels eines Dokumentengenerators in einen Report 413 umgewandelt, welcher in einem publikationsfähigen Format vorliegt, insbesondere PDF oder XPS.

Beide Arten von Reports 407, 413 werden von einer Uploadkomponente 414 per Netzwerk, beispielsweise Internet, an einen Server 500 übermittelt, welcher beide Reports 407, 413 speichert.

Es kann vorgesehen sein, dieses Verfahren mehrmals zeitlich versetzt zu wiederholen. Der Server 500 hält dadurch mit der Zeit eine Vielzahl von Reports 407, 413 für das Feldgerät 100 vor. Eine auf dem Server 500 oder auf einem anderen Gerät ablaufende Anwendungsapplikation ist dazu ausgestaltet, zumindest die maschinenlesbaren Reports 407 zu analysieren und beispielsweise einen Trend von einem oder mehreren der Reportparameter zu berechnen. Dadurch kann beispielsweise ein langsames Driften bestimmter Reportparameter detektiert werden, so dass der Anlageninhaber, bzw. der Feldgerätebesitzer von dem Server 500 frühzeitig auf präventive oder vorzunehmende (Wartungs-)Maßnahmen hingewiesen wird.

Das beschriebene Verfahren kann mehrere Alternativen aufweisen: Beispielsweise kann das Feldgerät 100 dazu ausgestaltet sein, den grafischen Code selbst zu erzeugen und an den Drucker zu übermitteln oder per Anzeigeeinheit zu visualisieren. In letzterem Fall wird der grafische Code von der ersten oder der zweiten Bedieneinheit 200, 400 optisch erfasst der physische Report 300 mittels des Druckers erstellt.

Es kann auch vorgesehen sein, dass nicht die zweite Bedieneinheit 400 den maschinenlesbaren Report 407, bzw. den Report in dem publikationsfähigen Dateiformat erstellt, sondern dass diese von dem Server 500 oder einem weiteren Gerät erstellt werden. Hierfür wird der unterzeichnete Report 300' von einem Scanner oder einer Kamera gescannt. Der Scan 401 wird anschließend an den Server 500 oder an das weitere Gerät übermittelt.

### Bezugszeichenliste

- 100: Feldgerät
- 200: erste Bedieneinheit
- 201: Feldbus-Master
- 202: Druckertreiber
- 210: Gerätebeschreibung
- 211: gerätespezifische Parameterliste
- 212: gerätespezifisches Reportlayout
- 220: Gerätetreiber
- 221: universelle Parameterlesekomponente
- 222, 404: Rohdatensatz
- 223: Reportformatierungseinheit
- 224: Codegenerator
- 300: physischer Report
- 300': unterzeichneter Report
- 400: zweite Bedieneinheit
- 401: optische Erfassungseinheit
- 402: Scan
- 403: Codeextraktionseinheit
- 405, 410: Reportdaten
- 406: feldgerätespezifische Informationen
- 407: maschinenlesbarer Report
- 408: Unterschriftenextraktionseinheit
- 409: Unterschrift
- 411: gerätespezifisches Reportlayout
- 412: Dokumentengenerator
- 413: Report in publikationsfähigem Dateiformat
- 414: Uploadkomponente
- 500: Server
- 600: Bediener

## Patentansprüche

1. Verfahren zum Erfassen von Ergebnissen einer Evaluierung, Diagnose und/oder Überprüfung von zumindest einer Gerätefunktionalität eines Feldgeräts (100), wobei das Feldgerät (100) im Rahmen der Evaluierung, bzw. Diagnose, bzw. Überprüfung zumindest einen Rohdatensatz (222) von Reportparametern enthaltend das Ergebnis der Evaluierung, bzw. Diagnose, bzw. Überprüfung generiert, umfassend:
a) Erzeugen eines physischen Reports (300), wobei der physische Report (300) einen grafischen Code mit codierten Informationen aufweist, wobei die codierten Informationen zumindest den Rohdatensatz (222), eine Geräteidentifikation des Feldgeräts (100) und das Datum des Reports umfassen, und wobei der physische Report (300) von zumindest einer Person mit zumindest einer Unterschrift unterzeichnet wird; **dadurch gekennzeichnet, dass** das Verfahren ferner die folgenden Schritte umfasst:
b) Erfassen eines digitalen Scans (402) der Titelseite des unterzeichneten Reports (300') mittels einer optischen Erfassungseinheit (401), auf welcher sich der grafischen Code und die mindestens eine Unterschrift befinden;
c) Separieren des grafischen Codes von dem Scan (402) und decodieren des in dem grafischen Code enthaltenen Rohdatensatzes (404) mittels einer Codeextraktionseinheit (403) und parallel dazu Separieren der zumindest einen Unterschrift von dem erfassten digitalen Scan (402) im Bildformat mittels einer Unterschriftenextraktionseinheit (408), wobei Reportdaten (405, 410) durch Anreichern des aus dem decodierten grafischen Code extrahierten Rohdatensatzes (222) mit feldgerätespezifischen Informationen erzeugt werden;
d) Erzeugen eines maschinenlesbaren Reports (407) und/oder eines Reports (413) in einem publikationsfähigen Dateiformat, insbesondere in einem PDF-Format, enthaltend die decodierten Informationen, wobei der maschinenlesbare Report (407) die Reportdaten (405, 410) enthält, bzw. wobei der Report (413) in dem publikationsfähigen Dateiformat die Reportdaten (405, 410) enthält, wobei der Report (413) in dem publikationsfähigen Dateiformat die zumindest eine separierte Unterschrift enthält; und
e) Übermitteln des maschinenlesbaren Reports (407) und/oder des Reports (413) in dem publikationsfähigen Format an einen Server (500).

2. Verfahren nach Anspruch 1, wobei eine erste Bedieneinheit (200) den Rohdatensatz (222) der Reportparameter aus dem Feldgerät (100) ausliest oder wobei die erste Bedieneinheit (200) das Feldgerät (100) anweist, den Rohdatensatz (222) der Reportparameter zu erstellen und an die erste Bedieneinheit (200) zu übermitteln, wobei die erste Bedieneinheit (200) den grafischen Code erstellt und einen Drucker anweist, den physischen Report (300) zu erzeugen.

3. Verfahren nach Anspruch 1, wobei das Feldgerät (100) den Rohdatensatz (222) der Reportparameter erstellt, wobei das Feldgerät (100) den grafischen Code erstellt und wobei das Feldgerät (100) einen Drucker anweist, den physischen Report (300) zu erzeugen.

4. Verfahren nach Anspruch 1, wobei das Feldgerät (100) den Rohdatensatz (222) der Reportparameter erstellt, wobei das Feldgerät (100) den grafischen Code erstellt, wobei das Feldgerät (100) eine Anzeigeeinheit aufweist und den grafischen Code visualisiert, wobei eine erste Bedieneinheit (200) den grafischen Code mittels einer optischen Erfassungseinheit erfasst, wobei die erste Bedieneinheit (200) einen Drucker anweist, den physischen Report (300) zu erzeugen.

5. Verfahren nach einem der Ansprüche 1 bis 4, wobei die Schritte b) bis e) mittels einer zweiten Bedieneinheit (400), welche die optische Erfassungseinheit (401) aufweist, durchgeführt werden.

6. Verfahren nach einem der Ansprüche 1 bis 4, wobei der Schritt b) mittels eines Scanners oder einer Kamera, welche die optische Erfassungseinheit (401) aufweisen, durchgeführt wird, wobei der erfasste optische Code und die zumindest eine erfasste Unterschrift auf einen Server transferiert werden und wobei der Server die Schritte c) und d) durchführt.

7. Verfahren nach einem der vorherigen Ansprüche, wobei die Person handgeschriebene Notizen auf dem physischen Report (300) vermerkt, wobei die handschriftlichen Notizen ebenfalls mittels der optischen Erfassungseinheit (401) erfasst werden und in dem maschinenlesbaren Report (407), bzw. dem Report (413) in dem publikationsfähigen Dateiformat enthalten sind.

8. Verfahren nach Anspruch 7, wobei die handschriftlichen Notizen im Anschluss an das Erfassen mittels eines OCR-Verfahrens maschinenlesbar gemacht werden.

9. Verfahren nach einem der vorherigen Ansprüche, wobei die Reportparameter Heartbeat-Parameter oder SIL-Parameter sind, welche im Zuge eines Diagnosetests des Feldgeräts (100) erstellt werden.

10. Verfahren nach einem der vorherigen Ansprüche, wobei der maschinenlesbare Report (407), bzw. der Report (413) in dem publikationsfähigen Format wiederholt erstellt und an den Server (500) übermittelt wird.

11. Verfahren nach Anspruch 10, wobei der Server (500) die Reportdaten (405, 410) der maschinenlesbaren Reports (407) auf Langzeitveränderungen und/oder Anomalien untersucht.

## Claims

1. A method for recording results of an evaluation, diagnosis and/or verification of at least one device functionality of a field device (100), wherein, within the scope of the evaluation, diagnosis or verification, the field device (100) generates at least one raw data set (222) of report parameters containing the result of the evaluation, diagnosis or verification, comprising:
a) generating a physical report (300), wherein the physical report (300) comprises a graphical code having encoded information, wherein the encoded information comprises at least the raw data set (222), a device identification of the field device (100) and the date of the report, and wherein the physical report (300) is signed by at least one person with at least one signature; **characterized in that** the method further comprises the following steps:
b) capturing a digital scan (402) of the title page of the signed report (300') by means of an optical capture unit (401), on which the graphical code and the at least one signature are located;
c) separating the graphical code from the scan (402) and decoding the raw data set (404) contained in the graphical code by means of a code extraction unit (403), and, in parallel therewith, separating the at least one signature from the captured digital scan (402) in image format by means of a signature extraction unit (408), wherein report data (405, 410) are generated by enriching the raw data set (222) extracted from the decoded graphical code with field-device-specific information;
d) generating a machine-readable report (407) and/or a report (413) in a publication-capable file format, in particular in a PDF format, containing the decoded information, wherein the machine-readable report (407) contains the report data (405, 410), and/or wherein the report (413) in the publication-capable file format contains the report data (405, 410), wherein the report (413) in the publication-capable file format contains the at least one separated signature; and
e) transmitting the machine-readable report (407) and/or the report (413) in the publication-capable format to a server (500).

2. The method according to claim 1, wherein a first operating unit (200) reads the raw data set (222) of the report parameters from the field device (100), or wherein the first operating unit (200) instructs the field device (100) to create the raw data set (222) of the report parameters and to transmit it to the first operating unit (200), wherein the first operating unit (200) creates the graphical code and instructs a printer to generate the physical report (300).

3. The method according to claim 1, wherein the field device (100) creates the raw data set (222) of the report parameters, wherein the field device (100) creates the graphical code, and wherein the field device (100) instructs a printer to generate the physical report (300).

4. The method according to claim 1, wherein the field device (100) creates the raw data set (222) of the report parameters, wherein the field device (100) creates the graphical code, wherein the field device (100) comprises a display unit and visualizes the graphical code, wherein a first operating unit (200) captures the graphical code by means of an optical capture unit, and wherein the first operating unit (200) instructs a printer to generate the physical report (300).

5. The method according to any one of claims 1 to 4, wherein steps b) to e) are carried out by means of a second operating unit (400), which comprises the optical capture unit (401).

6. The method according to any one of claims 1 to 4, wherein step b) is carried out by means of a scanner or a camera comprising the optical capture unit (401), wherein the captured optical code and the at least one captured signature are transferred to a server, and wherein the server carries out steps c) and d).

7. The method according to any one of the preceding claims, wherein the person enters handwritten notes on the physical report (300), wherein the handwritten notes are likewise captured by means of the optical capture unit (401) and are contained in the machine-readable report (407) and/or in the report (413) in the publication-capable file format.

8. The method according to claim 7, wherein the handwritten notes are made machine-readable by means of an OCR method after capture.

9. The method according to any one of the preceding claims, wherein the report parameters are Heartbeat parameters or SIL parameters which are created in the course of a diagnostic test of the field device (100).

10. The method according to any one of the preceding claims, wherein the machine-readable report (407) and/or the report (413) in the publication-capable format is repeatedly created and transmitted to the server (500).

11. The method according to claim 10, wherein the server (500) examines the report data (405, 410) of the machine-readable reports (407) for long-term changes and/or anomalies.

## Revendications

1. Procédé pour enregistrer des résultats d'une évaluation, d'un diagnostic et/ou d'une vérification d'au moins une fonctionnalité d'appareil d'un appareil de terrain (100), dans lequel, dans le cadre de l'évaluation, du diagnostic ou de la vérification, l'appareil de terrain (100) génère au moins un jeu de données brutes (222) de paramètres de rapport contenant le résultat de l'évaluation, du diagnostic ou de la vérification, comprenant :
a) la génération d'un rapport physique (300), le rapport physique (300) comprenant un code graphique comportant des informations codées, les informations codées comprenant au moins le jeu de données brutes (222), une identification d'appareil de l'appareil de terrain (100) et la date du rapport, et le rapport physique (300) étant signé par au moins une personne au moyen d'au moins une signature ; **caractérisé en ce que** le procédé comprend en outre les étapes suivantes :
b) la saisie d'une numérisation numérique (402) de la page de titre du rapport signé (300') au moyen d'une unité de saisie optique (401), sur laquelle se trouvent le code graphique et ladite au moins une signature ;
c) la séparation du code graphique de la numérisation (402) et le décodage du jeu de données brutes (404) contenu dans le code graphique au moyen d'une unité d'extraction de code (403), et, en parallèle, la séparation de ladite au moins une signature de la numérisation numérique saisie (402) au format image au moyen d'une unité d'extraction de signature (408), des données de rapport (405, 410) étant générées par enrichissement du jeu de données brutes (222) extrait du code graphique décodé avec des informations spécifiques à l'appareil de terrain ;
d) la génération d'un rapport lisible par machine (407) et/ou d'un rapport (413) dans un format de fichier apte à la publication, notamment au format PDF, contenant les informations décodées, le rapport lisible par machine (407) contenant les données de rapport (405, 410), et/ou le rapport (413) dans le format de fichier apte à la publication contenant les données de rapport (405, 410), le rapport (413) dans le format de fichier apte à la publication contenant ladite au moins une signature séparée ; et
e) la transmission du rapport lisible par machine (407) et/ou du rapport (413) dans le format apte à la publication à un serveur (500).

2. Procédé selon la revendication 1, dans lequel une première unité de commande (200) lit le jeu de données brutes (222) des paramètres de rapport à partir de l'appareil de terrain (100), ou dans lequel la première unité de commande (200) ordonne à l'appareil de terrain (100) de créer le jeu de données brutes (222) des paramètres de rapport et de le transmettre à la première unité de commande (200), la première unité de commande (200) créant le code graphique et ordonnant à une imprimante de générer le rapport physique (300).

3. Procédé selon la revendication 1, dans lequel l'appareil de terrain (100) crée le jeu de données brutes (222) des paramètres de rapport, dans lequel l'appareil de terrain (100) crée le code graphique, et dans lequel l'appareil de terrain (100) ordonne à une imprimante de générer le rapport physique (300).

4. Procédé selon la revendication 1, dans lequel l'appareil de terrain (100) crée le jeu de données brutes (222) des paramètres de rapport, dans lequel l'appareil de terrain (100) crée le code graphique, dans lequel l'appareil de terrain (100) comprend une unité d'affichage et visualise le code graphique, dans lequel une première unité de commande (200) saisit le code graphique au moyen d'une unité de saisie optique, et dans lequel la première unité de commande (200) ordonne à une imprimante de générer le rapport physique (300).

5. Procédé selon l'une quelconque des revendications 1 à 4, dans lequel les étapes b) à e) sont mises en œuvre au moyen d'une seconde unité de commande (400), qui comprend l'unité de saisie optique (401).

6. Procédé selon l'une quelconque des revendications 1 à 4, dans lequel l'étape b) est mise en œuvre au moyen d'un scanner ou d'une caméra comprenant l'unité de saisie optique (401), dans lequel le code optique saisi et ladite au moins une signature saisie sont transférés à un serveur, et dans lequel le serveur met en œuvre les étapes c) et d).

7. Procédé selon l'une quelconque des revendications précédentes, dans lequel la personne inscrit des notes manuscrites sur le rapport physique (300), les notes manuscrites étant également saisies au moyen de l'unité de saisie optique (401) et étant contenues dans le rapport lisible par machine (407) et/ou dans le rapport (413) dans le format de fichier apte à la publication.

8. Procédé selon la revendication 7, dans lequel les notes manuscrites sont rendues lisibles par machine au moyen d'un procédé OCR après la saisie.

9. Procédé selon l'une quelconque des revendications précédentes, dans lequel les paramètres de rapport sont des paramètres Heartbeat ou des paramètres SIL qui sont créés au cours d'un test de diagnostic de l'appareil de terrain (100).

10. Procédé selon l'une quelconque des revendications précédentes, dans lequel le rapport lisible par machine (407) et/ou le rapport (413) dans le format apte à la publication est créé à plusieurs reprises et transmis au serveur (500).

11. Procédé selon la revendication 10, dans lequel le serveur (500) examine les données de rapport (405, 410) des rapports lisibles par machine (407) afin de détecter des variations à long terme et/ou des anomalies.
